# EUROPEAN PATENT APPLICATION

(11) **EP 3 617 756 A1**
(43) Date of publication of application: **04.03.2020**
(21) Application number: 17907061.0
(22) Date of filing: 28.04.2017
(51) Int. Cl.: G02B 5/08, G02B 3/08, G02B 5/09

(54) **WEATHERPROOF MIRROR**

(71) Applicant: Komy Co., Ltd., Kawaguchi-shi, Saitama 332-0034 (JP)
(72) Inventor: KOMIYAMA, Sakae, Kawaguchi-shi Saitama 332-0034 (JP); UEKI, Ayumi, Kawaguchi-shi Saitama 332-0034 (JP)
(74) Representative: Cabinet Beau de Loménie
(86) International application number: PCT/JP2017/017048
(87) International publication number: WO 2018/198357

(57) **Abstract**

The present invention provides a mirror having excellent weatherproof properties that suffers little deterioration of the reflective layer even when, for example, the mirror is used outdoors for a long time. The present invention provides a weatherproof mirror wherein a substrate, a reflective layer, and a sealing resin layer are disposed in that order. The substrate is made of a transparent plastic plate; the reflective layer is a metal layer; and the sealing resin layer exhibits flexibility and self-adhesive property at room temperature and constitutes a continuous phase. In a preferable aspect, the substrate has a plurality of micro grooves with V-shaped cross-sections and thus has a Fresnel lens structure.

## Description

### FIELD

The present invention relates to a weatherproof mirror.

### BACKGROUND

Conventional mirrors have a structure in which a reflective layer and a protective layer are arranged in this order on one surface of a substrate constituted by a transparent material. Typically, the reflective layer is constituted by a metal foil such as an aluminum foil, and the protective layer is a layer which protects the reflective layer, and is typically a paint layer. A back plate is further arranged on the aforementioned protective layer as needed.

Furthermore, in recent years, mirrors (i.e., Fresnel mirrors) in which a reflective layer is provided on the annular inclined surface of a lens (i.e., a Fresnel lens), in which concentric ring-like inclined surfaces are formed in multiple steps on one side of a transparent plastic plate and which is formed so that the inclination angles increase gradually from the center of the concentric circles toward the radially outer side, have been proposed. For example, Patent Literature 1 describes a Fresnel mirror in which multi-step Fresnel lens-like inclined surfaces are formed on one surface of a transparent plastic plate, a metal foil is applied to the inclined surfaces, and a paint layer is further applied to the metal foil, whereby the surface of the transparent plastic plate opposite the inclined surface becomes a mirror surface through which the metal foil can be seen.

### [CITATION LIST]

### [PATENT LITERATURE]

[PTL 1] Japanese Unexamined Patent Publication (Kokai) No. 6-174906

### SUMMARY

### [TECHNICAL PROBLEM]

When mirrors in which a reflective layer and a protective layer are arranged on a substrate are used indoors, there are few problems with regards to weather resistance. However, when such mirrors are used outside, moisture such as rainwater enters the mirror from the periphery of the mirror despite the presence of the protective layer, whereby the reflective layer gradually deteriorates, and thus, there is a problem in that the reflective functionality thereof is reduced.

As a result of various investigations by the present inventors into the causes of such deterioration of the reflective layer, it has been discovered that the internal structure of the paint layer, serving as the protective layer, was the cause of such deterioration. Conventionally, paint layers are formed by spraying a paint obtained by dissolving a resin material such as an alkyd resin in a solvent onto the surface of the reflective layer in a mist-like form, and thereafter volatilizing the solvent at room temperature. Since the paint layer formed in this manner is formed by spraying the resin onto the reflective layer as a large number of droplets, after the solvent is volatilized, the paint layer has a porous structure having a large number of communication paths. Thus, moisture such as rainwater enters from the peripheral edge of the paint layer through these communication holes. Moisture that has entered the paint layer is considered to cause a reduction in the performance of the mirror due to oxidative degradation of the solid metal constituting the reflective layer or elution into water due to electrode reaction.

Furthermore, when the mirror is used outside, since the mirror is also exposed to significant temperature changes, in the case in which the substrate is a plastic plate, large dimensional changes may occur due to expansion and contraction as a result of such temperature changes, whereby the paint layer may not be capable of conforming to such dimensional changes and may crack. In some cases, the reflective layer may be further deteriorated by the penetration of moisture such as rainwater into such cracks.

The present invention solves such problems, and aims to provide a mirror having excellent weather resistance in which deterioration of the reflective layer is minimized when, for example, the mirror is used outside for long periods of time.

### [SOLUTION TO PROBLEM]

The present invention encompasses the following aspects.
[1] A weatherproof mirror comprising a substrate, a reflective layer, and a sealing resin layer arranged in this order, wherein
   the substrate is a transparent plastic plate,
   the reflective layer is a metal layer, and
   the sealing resin layer exhibits flexibility and self-adhesive property at room temperature, and constitutes a continuous phase.
[2] The weatherproof mirror according to Aspect 1 above, wherein the sealing resin layer and the reflective layer are in direct contact.
[3] The weatherproof mirror according to Aspect 1 or 2 above, wherein the substrate has a Fresnel lens structure comprising a plurality of microgrooves having V-shaped cross-sections.
[4] The weatherproof mirror according to any one of Aspects 1 to 3 above, wherein the sealing resin layer has a modulus of elasticity of 1 × 10⁴ Pa to 1 × 10⁷ Pa at room temperature, and an adhesive strength of at least 0.5 N/10 mm at room temperature.
[5] The weatherproof mirror according to any one of Aspects 1 to 4 above, wherein the sealing resin layer has a thickness of 0.025 mm to 0.4 mm.

### [ADVANTAGEOUS EFFECTS OF INVENTION]

Since the sealing resin layer, which protects the reflective layer, is a continuous phase in the weatherproof mirror of the present invention, deterioration of the reflective layer due to the penetration of moisture such as rainwater can effectively be prevented. Furthermore, since the sealing resin layer is flexible and self-adhesive, even if the substrate experiences significant dimensional changes due to exposure to drastic outdoor temperature changes, the substrate can easily conform to such dimensional changes, whereby cracking of the sealing resin layer is unlikely to occur. Thus, deterioration of the reflective layer due to the penetration of moisture such as rainwater into cracks can effectively be prevented. Furthermore, even when, for example, the sealing resin layer is cracked by external forces, the scattering of fragments can be prevented.

### BRIEF DESCRIPTION OF DRAWINGS

FIG. 1 is a schematic longitudinal sectional view of a mirror according to an embodiment of the present invention.
FIG. 2 is a schematic longitudinal sectional view of a mirror according to another embodiment of the present invention.
FIG. 3 is a schematic longitudinal sectional view of a mirror according to yet another embodiment of the present invention.

### DESCRIPTION OF EMBODIMENTS

The embodiments of the present invention will be described below. However, the present invention is not limited to the following aspects, and any modification which does not depart from the gist and the scope of the claims is encompassed by the present invention. In the drawings, elements which have been assigned the same reference sign are intended to have the same structure or function.

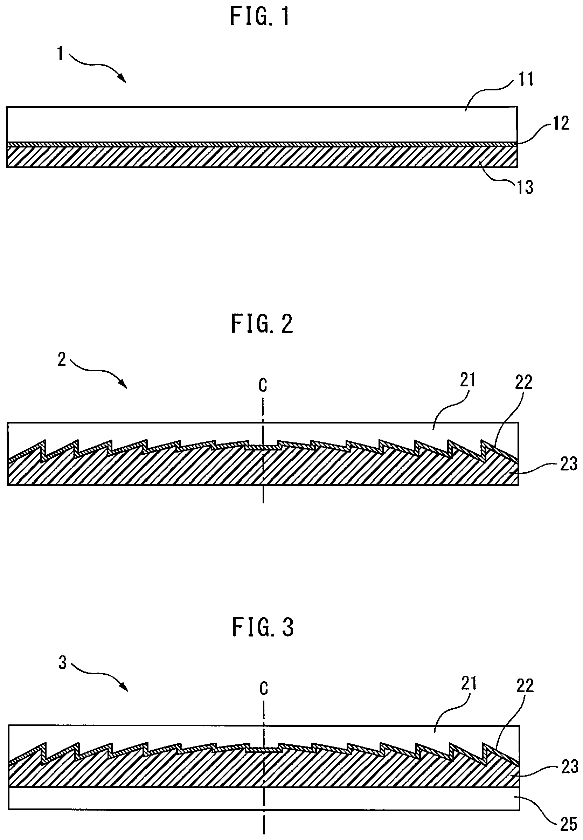

FIG. 1 is a schematic view of a mirror according to an embodiment of the present invention. In the weatherproof mirror 1, a reflective layer 12 composed of a metal is laminated onto one surface of a substrate 11 comprising a transparent plastic plate, and a sealing resin layer 13 is laminated thereon. The surface on the side opposite the side of the substrate 11 on which the reflective layer 12 is formed is a smooth surface, and the smooth surface is a mirror surface through which the reflective layer 12 can be seen.

In the embodiment illustrated in FIG. 2, the weatherproof mirror 2 comprises a substrate 21, which is a transparent plastic plate and which has a Fresnel lens structure, a metal reflective layer 22, and a sealing resin layer 23. The substrate 21 has a Fresnel lens structure serving as a convex lens due to the formation of a plurality of annular grooves having V-shaped cross-sections concentric about the center C. In other words, the weatherproof mirror 2 shown in FIG. 2 is a Fresnel mirror. Fresnel mirrors serve as convex mirrors while being thin and flat. The plurality of concentric annular grooves having V-shaped cross-sections form a multi-step inclined surface on one surface of the substrate 21. The reflective layer 22 is laminated on this inclined surface, and the sealing resin layer 23 is laminated onto the reflective layer 22.

The surface on the side opposite the inclined surface of the substrate 21 is planar. The planar surface is a mirror surface through which the reflective layer 22 can be seen. Note that though the multi-step inclined surface is illustrated with a rough pitch in FIG. 2 in order to facilitate understanding, the inclined surface is actually formed at a high density of approximately 2 to 10 steps per mm width. The reflective layer 22 is thinly laminated along the shapes of the annular grooves having V-shaped cross-sections of the substrate 21. Thus, the surface on the sealing resin layer 23 side of the reflective layer has a micro-grooved shape corresponding to the annular grooves having V-shaped cross-sections of the substrate 21. Further, since the sealing resin layer 23 is flexible and self-adhesive at room temperature and is a continuous phase, the resin constituting the sealing resin layer 23 conforms well to the multi-step annular grooves and can be completely filled therein so as to be in close contact with the annular grooves. Since the sealing resin layer 23 is a continuous phase, the reflective layer 22 can be substantially entirely shielded from the outside of the mirror. As a result, the sealing resin layer 23 contributes to the prevention of abrasion or damage to the reflective layer 22 due to contact with external objects, and contributes to the prevention of oxidative deterioration due to the penetration of rainwater therein. Thus, the sealing resin layer 23 contributes to the maintenance of excellent mirror performance over long periods of time.

In the example shown in FIG. 2, the inclined surface of the reflective layer 22 is inclined outwardly with respect to the center C of the concentric circles, and thus serves as a convex mirror. However, if the inclined surface is inclined inwardly with respect to the center C of the concentric circles, the inclined surface can serve as a concave mirror.

The weatherproof mirror 3 of the embodiment of FIG. 3 further comprises a back plate 25 laminated on the back surface of the sealing resin layer 23. In the weatherproof mirror 3 in the case in which the thickness of the substrate 21 is reduced, the back plate 25 can improve the shape retention properties as a mirror. It is preferable that the back plate 25 be composed of a material having high rigidity such as a metal, glass, wood, plastic, or the like.

In the weatherproof mirror of the present invention, a frame (not illustrated) may be mounted across the entirety of the outer peripheral edge of the weatherproof mirror. Particularly in the case in which the substrate is a thin plate, by the use of such a frame, deformation of the substrate can be prevented, and conventional reflective functionality can be maintained over long periods of time. Furthermore, a frame is advantageous in terms of the prevention of deterioration of the reflective layer due to the penetration of rainwater.

Preferred embodiments of each of the elements constituting the weatherproof mirror of the present invention will be described below.

### <Substrate>

The substrate is a transparent plastic plate. Examples of the material of the transparent plastic plate include polycarbonate resins, acrylic resins, polystyrene resins, polyethylene resins, and polyethylene terephthalate resins.

### <Reflective Layer>

The reflective layer is a metal foil. Examples of the material of the metal foil include metals such as aluminum, silver, chromium, and tin, and alloys and oxides thereof. Aluminum and alloys thereof are preferred. The metal foil can be laminated on the substrate by a method such as plating, vapor deposition, sputtering, or ion plating.

### <Sealing Resin Layer>

The sealing resin layer prevents direct contact of external objects with the reflective layer, and as a result, contributes to the prevention of abrasion or damage to the reflective layer. Furthermore, since the sealing resin layer prevents the penetration of moisture such as rainwater into the mirror, it contributes to the prevention of oxidative degradation of the reflective layer metal due to moisture and elution into water due to electrode reaction.

The sealing resin layer of the present invention is flexible and self-adhesive at room temperature. In the present invention, "room temperature" is defined as 20 °C. Furthermore, in the present invention, the sealing resin layer having flexibility means that at least a part of the sealing resin layer can be freely deformed by the application of external force, and preferably means that, for example, the sealing resin layer has flexibility sufficient to conform to the multi-step groove shape in the Fresnel lens structure. More specifically, the flexibility of the sealing resin layer at room temperature can be expressed as modulus of elasticity.

The modulus of elasticity that the sealing resin layer should have at room temperature is a shear complex modulus of elasticity as defined in JIS K 7244-6, and the lower limit thereof is preferably 1 × 10⁴ Pa, more preferably 5 × 10⁴ Pa, from the viewpoint of preventing deterioration in appearance due to leakage of the sealing resin layer from the mirror end, and from the viewpoint of obtaining a suitable reflective layer deterioration prevention effect. Furthermore, the upper limit thereof is preferably 1 × 10⁷ Pa, and more preferably 5 × 10⁶ Pa from the viewpoint of improving the conformity of the sealing resin layer to the surface shape of the substrate and the reflective layer to prevent peeling of the sealing resin layer, even when the air temperature changes during use.

The self-adhesiveness of the sealing resin layer at room temperature means that the sealing resin layer is capable of exhibiting self-adhesiveness with respect to the reflective layer at room temperature. As a result of such self-adhesiveness of the sealing resin layer, the reflective layer can be firmly affixed to the adjacent sealing resin layer, and the penetration of moisture into the interior of the mirror can be suitably prevented. Specifically, the self-adhesiveness that the sealing resin layer should have at room temperature can be expressed as adhesive strength measured in accordance with the measurement method described below defined in the JIS standards.

Specifically, the adhesive strength, which represents self-adhesiveness, is expressed as a value measured using an aluminum plate (A1050P, 1 mmt), corresponding to the reflective layer as an adhered body, in accordance with the 180° peel test defined by JIS K 6854-2, and the adhesive strength is preferably 0.5 N/10 mm or greater, and further preferably 1 N/10 mm or greater.

The following effects can be obtained as a result of the sealing resin layer having flexibility and self-adhesiveness at room temperature. The sealing resin layer can suitably conform with the shape of the substrate and/or the reflective layer due to changes in temperature when the mirror is used outside. Furthermore, since the sealing resin layer can be laminated on the reflective layer by, for example, pressing or the like, when, for example, the sealing resin layer is formed on a substrate having a Fresnel lens structure via a reflective layer, the sealing resin layer can suitably conform with the shapes of the microgrooves.

The sealing resin layer being a continuous phase means that the resin layer has a sealing structure through which liquid and gas cannot permeate. Thus, even in the case in which cavities are present within the resin layer, as long as the cavities are sealed and fully enclosed, the sealing resin layer is considered to be a continuous phase. However, in the case in which cavities fully penetrate the resin layer, allowing for the communication of liquid or gas, such a resin layer is not considered to be a continuous phase. The sealing resin layer being a continuous phase means that in an optical microscopic observation of any ten cross-sections of the sealing resin layer, a clear image of communicating holes which penetrate vertically cannot be confirmed in any cross-section by visual observation with an optical microscope at 20 times magnification.

As a result of the sealing resin layer being a continuous phase, unlike, for example, a conventional porous layer having communication holes, such as a paint layer, it is possible to prevent oxidative deterioration of the reflective layer due to the penetration of moisture, which contributes to the satisfactory durability of the weatherproof mirror.

The sealing resin layer is not limited to a single layer, and a structure in which two or more layer are used may be adopted. The characteristics of the sealing resin layer of the present invention are the characteristics exhibited by the entirety of the sealing resin layer. Thus, the sealing resin layer may be a sealing resin layer consisting of a layer which is a continuous phase and a layer which is not a continuous phase (referred to as a non-continuous phase in the present disclosure) (e.g., a foam layer) and satisfying, as a whole, the definition of a continuous phase described above, or may be a sealing resin layer including two flexible layers and a layer lacking flexibility interposed therebetween, and satisfying, as a whole, the definition of flexibility described above.

A sealing resin layer which is flexible and self-adhesive at room temperature can be obtained by appropriately selecting the type of resin, the molecular weight of the resin, and the type and quantities of any additives. Furthermore, the method for making the sealing resin layer a continuous phase is, for example, but not limited to, a method in which sealing resin layer material sheets are prepared in advance, and these sheets are laminated.

From the viewpoint of suitably obtaining the effects of adhesion with and protection of the reflective layer (i.e., the prevention of oxidative deterioration), the thickness of the sealing resin layer is preferably 0.025 mm or more, more preferably 0.05 mm or more, and further preferably 0.1 mm or more. From the viewpoint of preventing deformation, such as mirror distortion, the thickness of the sealing resin layer is preferably 1 mm or less, more preferably 0.5 mm or less, further preferably 0.4 mm or less, and particularly preferably 0.2 mm or less.

As the resin constituting the sealing resin layer, thermoplastic resins such as acrylic resins, silicone resins, polyolefin resins and ethylene vinyl acetate copolymer resins, thermosetting resins such as polyurethane resins and epoxy resins, and elastomeric resins such as chloroprene rubber, styrene butadiene rubber, butyl rubber, silicone rubber, acrylic rubber, and modified silicone rubber can be used, and these resins may be used alone or in combinations of two or more. From the viewpoint of obtaining suitable flexibility and adhesion with adjacent layers (the reflective layer in typical embodiments) over a wide temperature range, acrylic resins and silicone resins are particularly preferable as the resin constituting the sealing resin layer.

Examples of the acrylic resin include copolymers obtained by copolymerizing a monomer mixture comprising at least one (meth)acrylic acid alkyl ester, in which the alkyl group has 4 to 12 carbon atoms on average, and at least one functional monomer which is copolymerizable therewith by a known method such as solution polymerization, emulsion polymerization, bulk polymerization, suspension polymerization, or photopolymerization. If necessary, various types of additives such as tackifiers, crosslinkers, plasticizers, softeners, and anti-fouling agents can be used along with the acrylic resin.

Examples of the (meth)acrylic acid alkyl ester, in which the alkyl group has 4 to 12 carbon atoms on average, include butyl(meth)acrylate, 2-ethylhexyl (meth)acrylate, isononyl (meth)acrylate, isooctyl (meth)acrylate, and lauryl (meth)acrylate.

The functional monomer is typically a (meth)acrylic monomer having an active hydrogen-containing group. Examples of the active hydrogen-containing group include carboxy groups, hydroxyl groups, amide groups, amino groups, thiol groups, cyano groups, sulfonic acid groups, phosphoric acid groups, and quaternary ammonium (salt) groups. Examples of (meth)acrylic monomers containing a carboxy group include acrylic acid, methacrylic acid, itaconic acid, crotonic acid, isocrotonic acid, maleic acid, fumaric acid, citraconic acid, mesaconic acid, and derivatives thereof.

Examples of commercially available products which can be used as the acrylic resin sealing resin layer include adhesive sheets of HJ-90115B, J-90120B. CS9862UA, CS9863UA, and CS9864UA manufactured by Nitto Denko Co., Ltd., adhesive sheets of 300A80, 300A100, 300Z150B, and 300Z200B manufactured by KGK Chemical Corporation.

Known silicone resins such as addition reaction silicone resins and condensation silicone resins can be used as the silicone resin. Examples of addition reaction silicone resins include known polydimethylsiloxanes having an alkenyl group (for example, vinyl groups, and hexenyl groups) in the molecule. Examples of commercial products which can be used as the silicone resin sealing resin layer include KR-3700, KR-3701, X40-3237, and X40-3240 manufactured by Shin-Etsu Chemical Co., Ltd. Examples of catalysts for curing the addition reaction silicone resin include known platinum-based curing catalysts, such as chloroplatinic acid, complexes of chloroplatinic acid and an olefin, and combinations of chloroplatinic acid and an alcohol. Examples of condensation silicone resins include KR-105, KE-441, and KE-445 manufactured by Shin-Etsu Chemical Co., Ltd.

Though the weatherproof mirror of the present invention is preferable in particular for outdoor installation, it may be used for indoor installation as well. For outdoor installation, the mirror can be effectively used in the vicinity of entrances and exits of parking lots and warehouses, and in areas in which the volume of pedestrian traffic is high such as streets and train stations.

### EXAMPLES

The Examples of the present invention will be described below. However, the present invention is not limited to these Examples.

### Example 1

A polycarbonate sheet (MRF08U manufactured by Mitsubishi Gas Chemical, thickness 0.3 mm) was used as the transparent plastic substrate. Aluminum (A1050P) was laminated as the reflective layer on one surface of this substrate by vacuum deposition to produce a substrate-reflective layer laminate. This laminate was cut to a size of 150 mm × 70 mm, and an acrylic adhesive layer (HJ-90115B manufactured by Nitto Denko Corporation; thickness 0.15 mm) was laminated onto the reflective layer as the sealing resin layer (when 10 cross-sections were observed with an optical microscope at 20 times magnification, a clear image of communicating holes which penetrate vertically was not observed in any cross-section).

A weatherproof mirror was produced by laminating, as a back plate, a vinyl chloride resin plate (Kapilon plate manufactured by Kasai Sangyo; thickness 1.0 mm) cut to the same size of 150 mm × 70 mm as the laminate described above onto the sealing resin layer.

### Example 2

A weatherproof mirror was produced in the same manner as Example 1 except that a polycarbonate plate having a Fresnel lens structure serving as a convex lens, in which a large number of annular grooves having V-shaped cross-sections (width 0.2 mm, depth 0.2 mm) were formed concentrically at a pitch of 0.2 mm, was prepared as the substrate, and the reflective layer was laminated onto the Fresnel lens-structured surface of the substrate.

### Comparative Example 1

A mirror was produced by laminating aluminum, as a reflective layer, onto a substrate having the same structure as that of Example 1, laminating a paint layer, as a protective layer therefor, thereon by spray application of an acrylic silicone modified resin (Silicone Color Spray manufactured by Kanpe Hapio). The thickness of the paint layer was 0.1 mm.

### Comparative Example 2

A mirror was produced by laminating a reflective layer identical to that of Example 2 onto the Fresnel lens-structured surface of a substrate having the same structure as that of Example 2, and further forming, as a protective layer, a paint layer thereon in the same manner as Comparative Example 1.

### Comparative Example 3

A mirror was produced in the same manner as Example 1 except that a porous acrylic adhesive sheet (H7004 manufactured by Nitto Denko Corporation; thickness 0.4 mm) (when 10 cross-sections were observed with an optical microscope at 20 times magnification, a clear shape of communicating holes which penetrate vertically in was observed any cross-section) was used as the sealing resin layer.

### Comparative Example 4

A mirror was produced by laminating a reflective layer identical to that of Example 2 onto the Fresnel lens-structured surface of a substrate having the same structure as that of Example 2, and further laminating a sealing resin layer identical to that of Comparative Example 3 thereon.

### (Durability)

The six types of mirrors produced in Examples 1 and 2 and Comparative Examples 1 to 4 described above were immersed in an environmental solution having a salinity of 80 g/L and a pH which was adjusted to 3 using acetic acid, and were then allowed to stand for 96 hours in an environment of 50 °C. Thereafter, the maximum values of the lengths of the eroded portions formed by erosion of the reflective layer were measured, and the values were taken as the erosion length.

Evaluation of the measured erosion length was performed using the following evaluation criteria.

A: Erosion length of 0.3 mm or less
B: Erosion length of greater than 0.3 mm and less than 0.5 mm
C: Erosion length of 0.5 mm or greater

Note that the durability evaluation described above was conducted as an accelerated exposure test. From the conventional knowledge of the present inventors, an evaluation score of A corresponds to a durability of 10 years or longer in outdoor applications.

The mirror structures and evaluation results of Examples 1 and 2 and Comparative Examples 1 to 4 are summarized in Table 1.

**[Table 1]**

| | Mirror Structure | | | Durability |
|---|---|---|---|---|
| | Mirror Surface | Paint Layer | Sealing Resin Layer | |
| Example 1 | Planar | Absent | Continuous Phase | A |
| Example 2 | Fresnel | Absent | Continuous Phase | A |
| Comp Example 1 | Planar | Present | Absent | C |
| Comp Example 2 | Fresnel | Present | Absent | C |
| Comp Example 3 | Planar | Absent | Non-Continuous Phase | B |
| Comp Example 4 | Fresnel | Absent | Non-Continuous Phase | C |

Planar mirrors were used in Example 1 and Comparative Examples 1 and 3. In Example 1, in which a sealing resin layer of a continuous phase was used, the durability was satisfactory. Conversely, in Comparative Example 1, in which a conventional paint layer was used as the protective layer, erosion of the reflective layer spread from not only the edge of the mirror, but across the entirety of the mirror, resulting in very poor durability. Comparative Example 3, in which a porous sealing resin layer having porous communication passages was formed, had a longer erosion length, a larger erosion range, and a worse durability as compared to Example 1, in which the sealing resin layer was a continuous phase. Fresnel mirrors were used in Example 2 and Comparative Examples 2 and 4. Example 2, in which a continuous phase sealing resin layer was formed, had an excellent durability, similar to Example 1. In Comparative Example 2, in which the protective layer was a paint layer, like Comparative Example 1, erosion of the reflective layer spread from not only the edge of the mirror, but across the entirety of the mirror, resulting in very poor durability. Furthermore, in Comparative Example 4, in which the protective layer was a porous sealing resin layer having porous communication passages, the erosion length was significantly advanced along the annular grooves of the Fresnel structure, resulting in poor durability.

### INDUSTRIAL APPLICABILITY

The weatherproof mirror of the present invention can effectively be used in particular as a mirror for safety confirmation installed outside.

### REFERENCE SIGNS LIST

- 1, 2, 3: weatherproof mirror
- 11,21: substrate
- 12, 22: reflective layer
- 13, 23: sealing resin layer
- 25: back plate

## Claims

1. A weatherproof mirror comprising a substrate, a reflective layer, and a sealing resin layer arranged in this order, wherein
the substrate is a transparent plastic plate,
the reflective layer is a metal layer, and
the sealing resin layer exhibits flexibility and self-adhesive property at room temperature, and constitutes a continuous phase.

2. The weatherproof mirror according to claim 1, wherein the sealing resin layer and the reflective layer are in direct contact.

3. The weatherproof mirror according to claim 1 or 2, wherein the substrate has a Fresnel lens structure comprising a plurality of microgrooves having V-shaped cross-sections.

4. The weatherproof mirror according to any one of claims 1 to 3, wherein the sealing resin layer has a modulus of elasticity of 1 × 10⁴ Pa to 1 × 10⁷ Pa at room temperature, and an adhesive strength of at least 0.5 N/10 mm at room temperature.

5. The weatherproof mirror according to any one of claims 1 to 4, wherein the sealing resin layer has a thickness of 0.025 mm to 0.4 mm.
